# EUROPEAN PATENT SPECIFICATION

(11) **EP 1 175 783 B1**
(45) Date of publication and mention of the grant of the patent: **28.01.2004**
(21) Application number: 00928493.6
(22) Date of filing: 28.04.2000
(51) Int. Cl.: H04N 7/173

(54) **E-COMMERCE TELEVISION**
ELEKTRONISCHER HANDEL MITTELS FERNSEHEN
COMMERCE ELECTRONIQUE TELEVISUEL

(30) Priority: 30.04.1999 US 131980 P
(43) Date of publication of application: 30.01.2002
(73) Proprietor: Thomson Licensing S.A., 92648 Boulogne Cedex (FR)
(72) Inventor: WILLCOX, Michael, Eugene, Knightstown, IN 46148 (US)
(74) Representative: Kerber, Thierry
(86) International application number: PCT/US2000/011383
(87) International publication number: WO 2000/067484

(56) References cited:
- WO-A-98/00976
- WO-A-98/17064
- WO-A-99/04568
- DE-A- 19 507 091
- US-A- 5 553 064

## Description

### Field of the Invention

The present invention relates to television systems and, more particularly, to television systems which utilize the auxiliary information associated with a television program signal to establish a communication channel.

### Background of the Invention

Today, television programming for the home viewer is available from many sources such as, terrestrial broadcasting, cable distribution, satellite broadcasting or the like. The television programming may be provided in an analog and/or digital format. In either case, the television programming includes audio and video information for a plurality of channels and may also include other information, for example, closed captioning, program ratings ("V-chip"), stock/data tickers, or the like.

Typically advertisements associated with television programs encouraged viewers to purchase a product or service the next time they went shopping or needed the service. With the widespread use of credit cards and the like, the use of toll-free telephone numbers displayed along with the commercial permitted the viewer to call and immediately place an order for the product or service. Today, networks such as QVC® and the Home Shopping Network® devote their entire programming to selling products and services. With advances in television broadcasting and reception technology, advertisements for products and/or services may now be sent along with the audio and video information for use with electronic program guides (EPGs) or the like, and displayed on the television integral with the EPG or the like.

However, in all of the above cases, a viewer must either call a telephone number, and tender payment by credit card or mail in payment in order to purchase the product/service being advertised on the television. Ordering via the telephone is generally a time-consuming and frustrating event for the consumer. Telephone operators are busy during the times when the infomercial or advertisement is being aired and thus the consumer is faced with telephone busy signals and being put on hold. If the consumer does not reach an operator, he/she will generally not call back.

Document WO 99/04568 describes a system which allows a user to purchase product by an order center, using an extra device that is separated from the television receiving the advertisement for the product by means of a remote centralized database in which are held the user's name and address. This system involves specific manual and perhaps tedious operations for any new user of the order center. Also, it requires that user to not only obtain (e.g. purchase) the extra device, but also to have the device ready when an ad is shown on television in order to take advantage of remote shopping possibilities.

### Summary of the Invention

The present invention provides an in-home shopping system that permits a user to initiate a purchase of a product or service in response to viewing an advertisement on the user's television without utilizing the Internet. Particularly, the present invention assists the user by establishing a telephone connection with minimal user involvement. That is, the home shopping experience is improved by reducing the time spent on the telephone when ordering products advertised on the television. Also, the invention enables any new use of an order center for remote shopping to win time and energy. This is obtained through a remote shopping method according to claim 1 and a device according to claim 9.

Further, the present invention provides a system for advertising a product on a television and for providing a means for ordering the product via the television. The purchase transaction may be partially accomplished by the television through the transfer of user data previously stored in the television. In one form, the present invention is a television system comprising: a) a receiver configured to receive a television signal and auxiliary data associated therewith, the auxiliary data permitting a user to initiate the purchase of a product or service associated with the television signal; b) memory coupled to the receiver and adapted to contain user information; and c) communication means for automatically establishing a connection with an order center in response to the user.

In another form, the present invention is a method of in-home shopping utilizing a television system. The method comprises: a) receiving a television signal comprising auxiliary data associated with the television signal; b) displaying a selectable purchase initiation icon for the purchase of the product or service associated with the television signal in response to at least a portion of the auxiliary data; c) selecting the purchase initiation icon to initiate the purchase of the product or service; d) establishing a data connection between the television system and an order center for the product or service; e) downloading user information stored in the memory to the order center after establishment of the data connection; and f) establishing a voice connection between the user and an agent of the order center.

In yet another form, the present invention is a television operable to provide in-home shopping. The television comprises: a) a selector operable to receive a television signal having an advertisement for a product or service and associated auxiliary information; b) a processing unit; c) a display operable to show the television signal and the advertisement; d) an on-screen display unit operable to produce a selectable initiate purchase icon on the display for the purchase of the product or service of the advertisement in response to the auxiliary information and in conjunction with the advertisement; e) a control system operable to allow a user to select the initiate purchase icon; f) communication means operable to establish a data connection, download information, and establish a voice connection; and g) memory in communication with the processing unit, the memory containing user information and a plurality of instructions which, when executed by the processing unit causes: 1) the communication means to establish the data connection between the television and a remote order location upon the user selecting the initiate purchase icon to initiate a purchase transaction for the product or service of the advertisement; 2) the communication means to download the user information upon establishment of a data connection between the television and an order location; and 3) the communication means to establish a voice connection between the user and an agent of the order location upon completion of the downloading of the user information.

### Brief Description of the Drawings

Reference to the following description of the present invention should be taken in conjunction with the accompanying drawings, wherein:
Fig. 1 is a block diagram of a system for advertisement delivery to a user's television;
Fig. 2 is an enlarged depiction of a remote that may be used as a control device;
Fig. 3 is a block diagram of the present system in accordance with the principles of the present invention;
Fig. 4 is a depiction of a television display incorporating the selectable auxiliary information;
Fig. 5 is a depiction of a television display after selection of auxiliary information;
Fig. 6 is a depiction of a television display after commencing the ordering process from the television display of Fig. 5;
Fig. 7 is a depiction of a television display upon selection of a SELECT function from the television display of Fig. 6;
Fig. 8 is a depiction of a television display upon completion of data exchange between the television and a remote call center;
Fig. 9 is a block diagram depicting an alternative method of communication for the present system; and
Fig. 10 is a flow chart of an exemplary advertising and ordering/purchasing process in accordance with the principles of the present invention.

Corresponding reference characters indicate corresponding parts throughout the several views.

### Detailed Description of the Invention

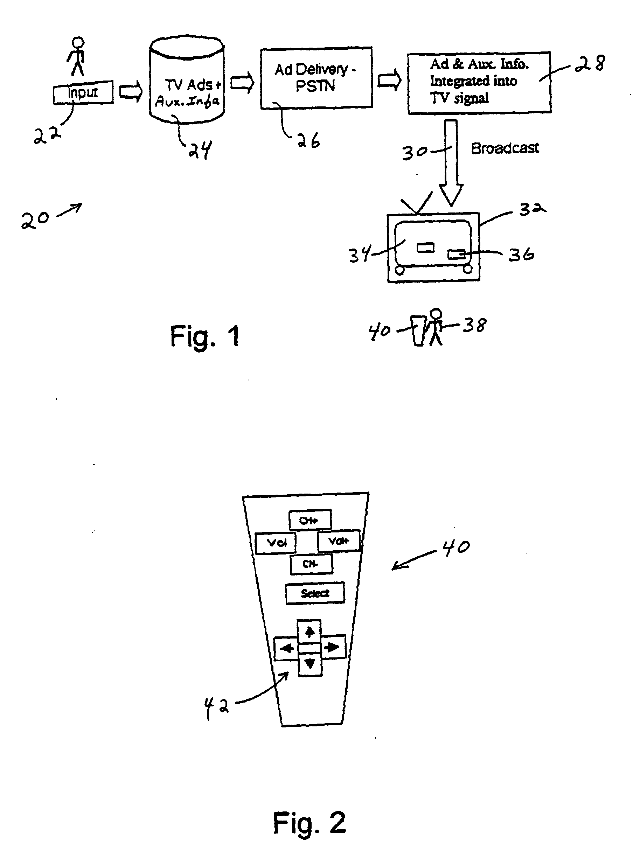

With reference now to Fig. 1, there is shown a block diagram of a system, generally designated 20 for the development, insertion, and broadcast or transmission of an advertisement or the like to a remote television. The advertisement incorporates auxiliary information or data at least some of which is selectable by the user of the remote television in accordance with an aspect of the present invention. It should be appreciated that the term *advertisement* means a commercial of any length including what are known as infomercials, a still frame, picture or graphic, or any audio/video presentation, animated or not, for an offer to sell a product, good and/or service that is able to be formatted and broadcast as or within a television signal. *Auxiliary information* includes data that allows the television to display a selectable icon or icons or a selectable area or areas on the television typically within the advertisement, generally through an on-screen display (OSD) unit. *Auxiliary information* also includes data for communicating information concerning a selection from the television via a back channel to a call center or the like. The auxiliary information may contain software for operating the television 32 or for providing additional functionality thereto.

In particular, a produced or created advertisement 22 having embedded or added auxiliary information or data is stored in a central system, computer or server 24. The server 24 transmits or delivers, as depicted in box 26 one or more of the advertisements stored therein to a television broadcast station 28 where the advertisement and auxiliary information is incorporated into the television signal. Transmission or delivery of the advertisement or advertisements and auxiliary information may be accomplished via any method such as by the Internet, a public switch telephone network (PSTN), or similar delivery medium. The broadcast station 28 then broadcasts, represented by arrow 30, the advertisement and auxiliary information along with the television signal. Broadcasting includes terrestrial, cable, satellite, or any other manner of transmitting a television signal from one point to another point.

The advertisement and auxiliary information may be recorded and stored on a reproduction medium (i.e. a tape) and transported to a broadcasting facility for incorporation into the television signal. As well, the advertisement and auxiliary information may be directly broadcast after being generated.

In the case of an analog television signal, if the advertisement is a still picture, graphic or the like, the advertisement and auxiliary data are preferably formatted into the vertical blanking interval (VBI) of the television signal. If the advertisement is a commercial or infomercial having audio and video content, the commercial may be transmitted as a normal television signal with the auxiliary information transmitted in the VBI. Thus, in the case of an analog television signal, the auxiliary information is preferably inserted into the VBI, while the advertisement itself may be in the VBI or transmitted as a television signal. In the case of a digital television signal, both the advertisement (in whatever form) and the auxiliary information are formatted or packetized for digital transmission in accordance with the chosen encoding scheme and modulation technique as are known in the art.

Various signal formats for embedding the auxiliary information in the television program signals are available. For example, a protocol known as ATVEF proposed by the Advance Television Enhancement Forum, an alliance of television communication and computer companies is advantageous. The protocol is based on the HTML (HyperText Markup Language) utilized in the Internet. The ATVEF protocol also may be used with both analog and digital television systems. Of course, other protocols may be used.

The broadcast television signal is received and processed by a television 32. The television 32 includes a display 34 that is depicted showing an icon 36 that is selectable by a user 38 through a suitable control system for the television 32, the icon 36 being sent as at least a portion of the auxiliary information. Selection of the icon 36 and other television control functions as are known in the art are preferably performed via a remote control unit (remote) 40. It should be appreciated, however, that other television control methods may be used. The remote 40 may be used to highlight an area of the display 34 or move a cursor or the like to a particular area on the display 34.

In Fig. 2, there is shown the remote 40 in greater detail. The remote 40 usually includes at least a channel up button (CH +), a channel down button (CH-), a volume up button (VOL+), and a volume down button (VOL-). In addition, a SELECT button is provided for allowing the selection of a highlighted icon, menu choice or the like shown on the display 34. In addition, the remote 40 includes various navigation buttons 42 that at least permit the user 38 to highlight a particular icon or menu choice and/or position a cursor onto or over a particular area of the display 34. A typical remote also includes a plurality of other control/selection buttons that are not depicted in Fig. 2 for clarity with regard to the present invention depending on the features of the television. The remote 40 is preferably an infrared (IR) type remote but may be radio frequency (RF) or any other type that allows control signals to be transmitted therefrom and received by the television 32. The television 32 must, of course, be configured and/or adapted to receive whatever type of signals are transmitted/sent from the remote 40.

Once the advertisement is received by the television 32, the advertisement and other information may be shown on the display 34 of the television 32 in a variety of ways depending on the format of the advertisement. If the advertisement is a still (single) frame, picture or graphic with or without text, it may be displayed in conjunction with any television programming on any channel. The entire advertisement or a portion thereof is selectable to initiate the ordering process. If the advertisement is a commercial, infomercial, network, or the like having video and possibly audio content, the advertisement may consist only of a selectable icon or area, such as an "Order Now" icon that is displayed over or along with the video content.

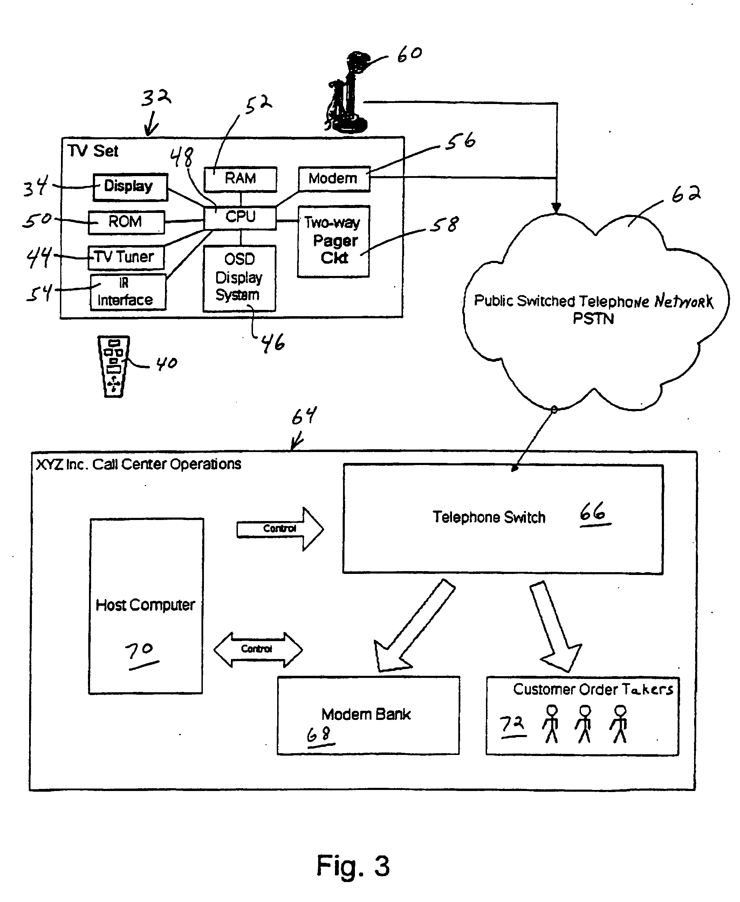

With reference to Fig. 3, there is depicted the television 32 incorporating a block diagram of the various components of the television 32 that allow the television 32 to operate in accordance with the principles of the present invention. The television 32 includes a television signal selector or tuner 44 that is configured to receive a television signal/advertisement as described above. The selector 44 is in communication with a central processing unit (CPU) 48 as is typical in the art. An IR interface 54 is in communication with the CPU 48 and is adapted to receive the control signals from the remote 40. It should be appreciated that if the remote 40 operates other than by infrared, the IR interface 54 represents an interface/circuitry necessary to receive the signals from the remote 40.

The television 32 also includes read only memory (ROM) 50 and random access memory (RAM) 52 as are well known in the art. The television 32 further includes an on-screen display (OSD) processing unit 46 that is in communication with the CPU 46 and is configured to provide the display 34 with OSD information. The OSD processing/generating unit 46 allows the display of selectable icons on the display 34. OSD information is part of the auxiliary data transmitted with the advertisement.

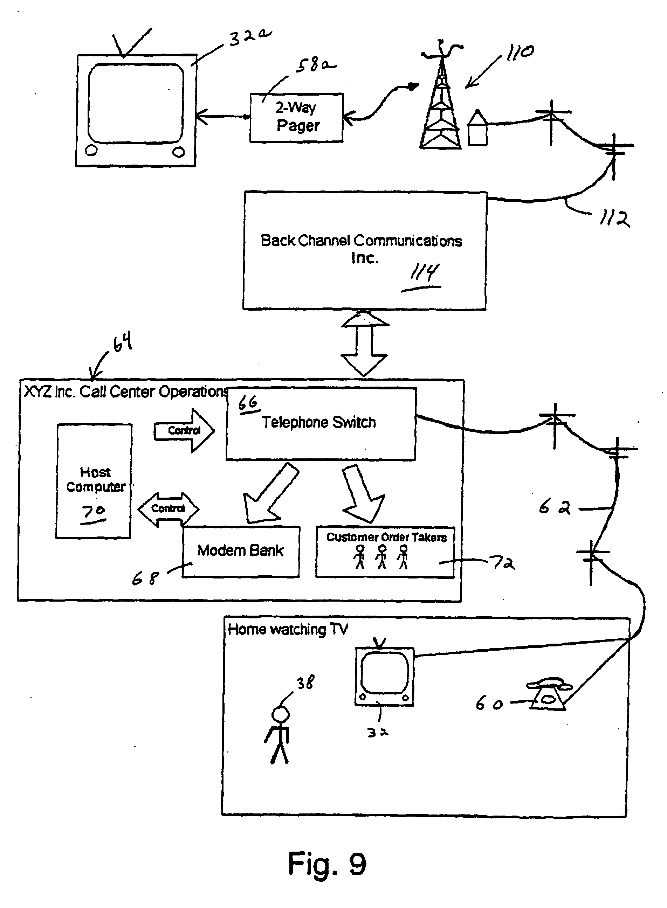

The television 32 may also include a two-way pager circuit 58 that is in communication with the CPU 48 the purpose of which will be described below with reference to Fig. 9. As well, the television 32 may include a modem 56 or similar device that is in communication with the CPU 48 and a telephone network 62, such as a public switched telephone network (PSTN) as is known in the art. A conventional telephone 60 is also in communication with the telephone network 62. It should be appreciated that the television 32 and telephone 60 are typically located in the user's home. Other interconnections of the various components of the television 32 that are not shown are possible and probable.

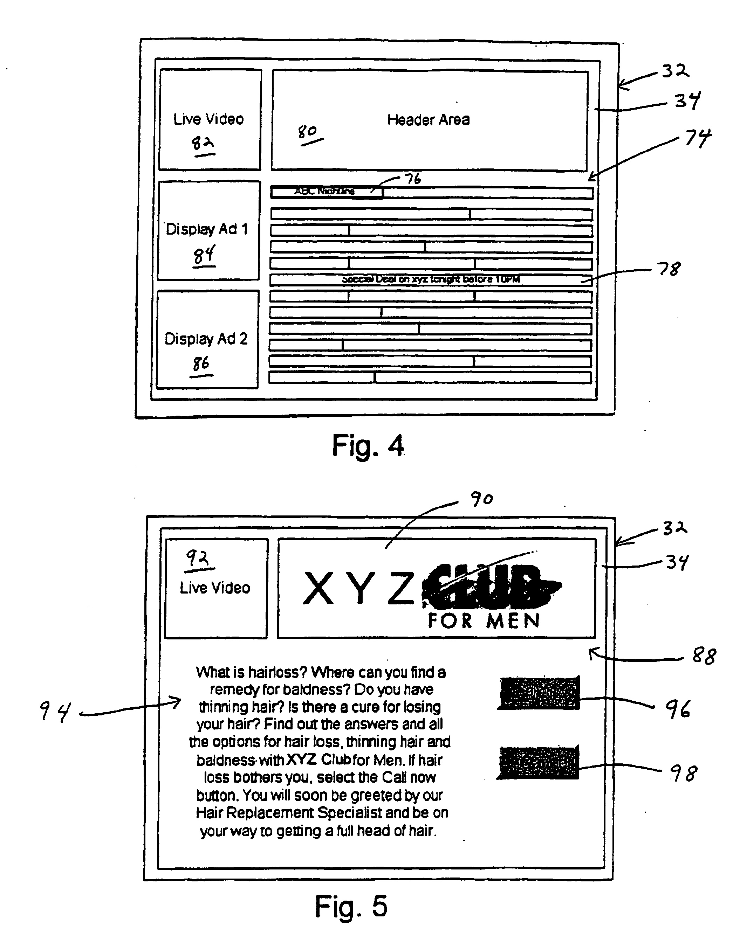

With reference to Fig. 4, there is depicted the television 32 showing a screen layout particularly depicting an electronic program guide (EPG) or listing 74 on the display 34. The EPG 74 is a typical EPG grid that lists a plurality of programs/listings (of which the listing "ABC Nightline" 76 is shown) within current and upcoming time slots that may be viewed on the various channels of the television 32. The listing 76 is outlined to denote that it is highlighted. Such highlighting can be moved around the EGP 74 and the various other areas on the display 34 through the use of the navigation keys 42 on the remote 40 (see Fig. 2). If the user 38 selects the highlighted program listing (here via the SELECT button on the remote 40), the television is tuned to that channel and the EPG 74 is removed from the display 34.

It should be appreciated that the EPG 74 described herein is only exemplary and/or representative of a manner of providing/presenting an advertisement or advertisements with auxiliary information as per the principles of the present invention. The advertisement(s) may be provided in other manners not depicted and/or particularly described herein such as an advertisement area overlaying or adjacent a television program and/or an advertisement icon overlaying an infomercial, commercial, or the like.

In Fig. 4, the EPG 74 may include a header area 80 where various header information may be displayed, a live video area 82 in which live video is shown generally relative to the program highlighted on the EPG grid 74, a first display advertisement area 84, and a second display advertisement area 86. The first and second advertisement areas 84 and 86 may or may not include OSD auxiliary information that is selectable in accordance with the principles of the present invention.

Included in the EPG 74 is an advertisement 78 that has been transmitted with the EPG as described above. The advertisement 78 is selectable by the user 38 by highlighting the advertisement 78 via the navigation keys 42 on the remote 40. *Selectable* also means any other manner in which a certain area, icon, and/or text may be chosen by the user 38 via a television control device and/or system. It should be appreciated that the advertisement 78 is exemplary and/or representational of the an advertisement in accordance with the principles of the present invention. As such an advertisement in accordance with the present principles may consist of a single area or icon selectable by the user as represented by area 78, a still frame advertisement that is selectable by the user 38 or contain an icon therein as could be produced in display ad areas 84 and 86, or a video having selectable areas/icons. In all cases, the principles of the present invention are the same. Selection of the area 78 preferably causes a separate advertisement page, screen, frame or video to be shown on the display 34. As well, in all cases, the television 32 may play accompanying audio.

With reference to Fig. 5, an advertisement page 88 as is caused to be shown by selection of the area 78 is shown on the display 34. The advertisement page 88 may include a header area 90 where a trademark, name or other information may be displayed, a live video area 92 that may show the television channel that was being watched previous to selection of the advertisement or relative to the advertisement, a text area 94, and selectable icons 96 and 98. One icon 98 ("Cancel") allows the user 38 to cancel the pending purchase transaction. If this option is selected, the advertisement page 88 will cease being shown on the display 34 and the display 34 will return to the previously displayed video/screen. Another icon 96 ("Call Now") allows the user 38 to order the product. A text area 94 may also be displayed to provide the user 38 information about the product before ordering. Selecting the icon 96 begins the ordering process.

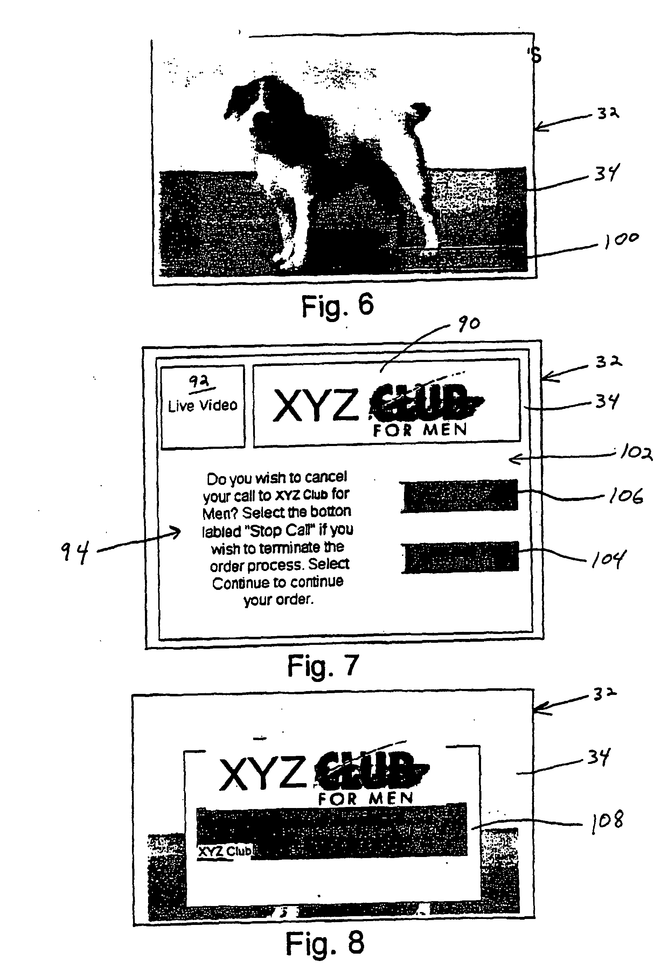

Upon selection of the icon 96 the ordering process commences and the screen 88 may be replaced with that shown in Fig. 6 or the EPG as was previously being displayed on the television 32. In any case, the television 32 returns to display audio and video of a particular channel and/or overlay such as the EPG. A progress or status box or area 100 is preferably superimposed, overlayed, or projected onto the current television channel. The text within the progress box 100 may change as the ordering process takes place in accordance with what is occurring. In Fig. 6, the text of the progress box 100 is indicating that the television 32 is in the process of connecting to an order process location.

With reference back to Fig. 3, the television 32 is operable to connect to an order process location, such as a call center 64 or the like, via the modem 56. When the user 38 initiates the ordering process, the modem is caused to dial a telephone number for the order process location 64 that handles the ordering. The auxiliary information sent with the advertisement includes the telephone number of an order fulfillment center or order process location 64. The order process location 64 may be a central order processing center that handles orders for different products for the same or different advertisers, a call center or office for a single advertiser, or the like.

In any case, the call center 64 includes a telephone switch 66 that connects a modem of a modem bank 68 (or a single modem) to the modem 56 of the calling television 32 and establishes a data connection between the television 32 and the call center 64. The modem 68 is preferably under control of a host computer 70. Once the data connection is established, various personal and other identifying data (i.e. a user's profile) that has been previously stored in the television 32 is downloaded to the host computer 70. The personal and other identifying data or information relative to the user is previously stored in the RAM 52 of the television 32 preferably through a set-up screen as is known in the art. Such information may include: 1) the name of the user; 2) the home address of the user; 3) a mailing address of the user; 4) the telephone number of the user; 5) credit card information necessary to pay for the order; 6) television ID, and the like. During the set-up process for inputting and storing the various personal and other identifying data into the television 32, the user 38 has the option of what and how much of such information to include. The information is stored on the television 32 and is obtained via a two-way data connection such as a modem or a two-way pager connection and not through the Internet. Data encryption may also be used. The more information stored in the television the less information the user must manually give to an order taker, and thus the less time to complete the ordering/purchasing transaction.

If the call center 64 is busy, the television 32 will keep trying to connect to the call center 64. If there is a problem with the downloading of the data from the television 32 after a data connection is made with the call center 64 the television 32 will keep trying to download the data to the call center 64. Once the information stored in the television 32 has been downloaded to the host computer 70 of the call center 64, call predictive software operating on the host computer 70 determines when and/or how long it will take for a live order taker 72 (agent) to be free to speak with the user and complete the purchase transaction. The length of time until a live order taker 72 may speak with the user depends on the current and queued call in load. During the time after the data has been downloaded from the television 32 and the user is waiting to speak with an order taker 72, the television 32 continues to maintain a data connection and provide text in the status box 100 that the transaction is proceeding. Once it has been determined that an order taker 72 is or will be quickly available, the television 32 will automatically mute the audio, and flash a message 108 such as that shown in Fig. 8, indicating that it is time to pick up the telephone 60 and complete the ordering transaction.

The modems 56 and 68 continue to maintain a data connection until the user 38 comes on line with the telephone 60. When the user 38 comes on line with the telephone 60, the CPU 48 will detect that the user has come on line and send a signal to the telephone switch 66 to bring on the live order taker 72 to complete the ordering transaction. Detection may be accomplished by any number of well-known solutions. The order taker 72 may obtain any information not downloaded by the host computer 70, or may just confirm to the user that the order has been received and provide an estimate of the shipping time. When the user 38 comes on line with the telephone 60, the television 32 reverts to normal television operation.

If, at any time before the user 38 speaks with an order taker 72, the user 38 wants to cancel the ordering process, the user 38 may press, for example, SELECT on the remote 40. This will cause an order cancel screen such as that shown in Fig. 7 to be shown on the display 34. With reference to Fig. 7, the user 38 is provided information within the text area 94 and the choice from two selectable icons, a stop call icon 104 that will cancel the ordering process, and a continue icon 106 that will allow the ordering process to proceed.

As well, the user 38 may change and view various channels on the television 32 during the ordering process when the television modem 56 and the call center modem 68 still maintain a data connection.

A delay time (or specific time) could be downloaded to the television 32 after the purchase information is transferred if it is determined by the call center64 predictive software that such is necessary (delay mode). This may be necessary when it is determined that it may take an order taker too long to respond and/or be cost effective to the call center 64. It may not be cost effective to the call center 64 to stay on the line for a long time since a toll-free number is typically provided for the customer by the call center 64. If this is the case, the call center 64 would send a signal to the television 32 that the line should be dropped (disconnected). This allows the user to receive telephone calls while waiting for the live agent. The television 32 would drop the line and then telephone the call center 64 after the delay (or at the specific time). This action would be transparent to the user 38, with the television 32 continuing to display the fact that a purchase is pending, and that the live agent would be available. Another way is for the host computer 70 to call directly the user's home after the transfer of information and the live agent is available. Variations of the above are, as well, possible.

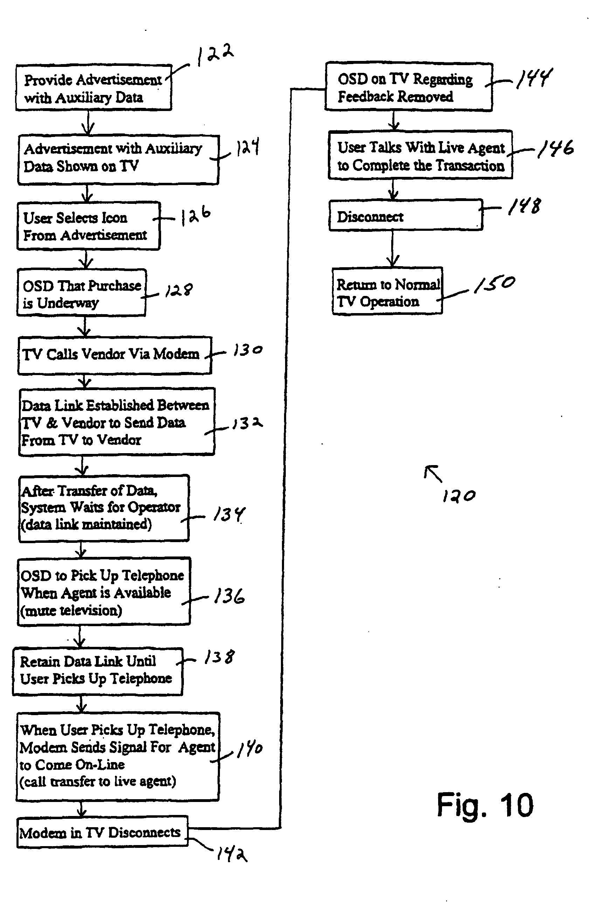

In order to more fully appreciate the principles of the present invention, reference is now made to Fig. 10. Fig. 10 is a block diagram, generally designated 120, of a method of providing on-line shopping for a consumer via a television (eTV) with either a modem or pager. In block 122, an advertisement in accordance with the principles of the present invention as set forth herein is provided (broadcast). Since this is broadcast as part of the television signal, any television configured as set forth herein may take advantage of the present invention. The advertisement with the auxiliary data is shown on a consumer's television, block 124, when appropriate. Typically the advertisement is shown when the consumer tunes a particular channel on the television.

In block 126, the consumer selects a "buy" or "purchase" icon being displayed on the television via a controller indicating the consumer's decision to purchase a product/service. An OSD is produced on the display 34 that the purchase is underway, block 128. In block 130, the television 32 calls a vendor via the modem 56, the telephone number of which is part of the auxiliary data sent with the advertisement. When the call center 64 answers, a data link is established between the television (the modem 56) and the vendor (the call center 64 modem 68) in order to send data stored in the television 32 to the vendor (the call center 64 host computer 70), block 132. In block 134, after the transfer of data from the television 32 to the host computer 70, evidence by signaling between the modem 56 of the television 32 and the host computer 70 of the call center 64, the system (television 32) waits for a live operator (a customer order taker 72) to be connected to the telephone line. The data link between the television 32 and the call center 64 is maintained.

When a live agent 72 will be available to complete the order and connects to the telephone line, an OSD is provided on the display 34 indicating that it is time for the consumer to pick up the telephone 60. The call center software then provides a signal to mute the audio of the television 32, block 136. The data link between the television 32 and the call center 64 is retained until the consumer comes on-line via the telephone 60, block 138. When the customer picks up the telephone 60, the modem 56 must disconnect for the agent (customer order taker 72) to come on-line (i.e. the call is transferred to the agent), block 140. The modem 56 may send a signal to indicate it is time to disconnect, simply drop the line, or any other solution to indicate that the customer has picked up the telephone 60. After the agent comes on line, the modem 56 of the television 32 disconnects, block 142, and any OSD on the display 34 is removed, block 144.

Thereafter, the customer speaks directly with the live agent to complete the purchase transaction giving any information not stored and/or transmitted from the television 32 to the host computer 70 and/or receiving any information from the live agent, block 146. If at this time, the customer wishes to purchase/add another item, they can do so since the pertinent information has already been transferred. When the purchase transaction is complete, the telephone is disconnected, block 148, and the television 32 returns to normal operation, block 150.

With reference to Fig. 9, there is depicted an alternative method of establishing communication between the television 32a and the call center 64. As well, it should be appreciated that Fig. 9 shows that several televisions 32 may be in contact with the call center 64 via different methods. It should be appreciated that the call center 64 is adapted to receive telephone calls from a plurality of televisions. In addition to the embodiment of Fig. 3 which is reproduced in Fig. 9, a television 32a may use a two-way pager 58a to establish contact with the call center 64. It should also be appreciated that the call center 64 is preferably adapted to take voice orders on its toll-free (or toll) line.

In this regard, the television 32a is configured to utilize the pager 58a to transmit a message and/or signal to a pager facility 110. The pager facility 110 then uses a telephone network 112 (or any other communications network) to reach a communications company 114 that relays the information to the call center 64. The call center 64 may, as well, provide a message and/or signal to the television 32a via the same channel of communication.

Specifically, a user confirms his/her desire to purchase a product/service as described above. The previously stored user data is put into a transmit buffer to transfer to a paging network. The user data is sent to the two-way pager 58a which is transmitted to a receiving station 110. The paging network 112 receives the user data and transfers it to the call center 64 (host computer 70) via known solutions. The call center 64 software, by looking at the number of calls in progress estimates the wait time needed for this customer to speak with a live agent and communicates this wait time to the paging network 112. The paging network 112 sends this information via station 110 to the two-way pager 58a. This signal is an order confirmation time wait information (time period or specific time) that is received by the television 32a.

When the specified time has elapsed, the television 32a will automatically call the call center 64. The modem 68 will transfer any customer information previously stored that was not completed during the initial contact via the pager network. The remainder of the purchase transaction takes place as described above.

It should be appreciated that the use of the two-way pager 58a minimizes the use of the telephone line, as the call is only made just prior to the availability of the agent. This minimizes telephone line use during ordering and waiting time for the customer, as well as minimizing the toll-free telephone number costs for the call center.

Rather than utilizing a pager or telephone to initiate/complete the purchase transaction, the television 32 may include a cell modem/phone. The cell modem/phone is capable of transmitting both data and voice over a cell phone network (digital and/or analog) rather than using a modem or pager and a telephone. The television would be equipped with a microphone coupled to the telephone line, so that the television also functions as a telephone. In this manner, the user would speak directly to the order taker through the television without the need to separately pick up the telephone when the agent is ready to come on-line. The purchase transaction would proceed as above, including the OSD information on the television. All other aspects of the present invention would also remain the same.

As well, the modem, pager or cell phone may be used as the communication channel on both ends. This would be useful if a particular broadcaster (or rebroadcaster) typically strips the information from the VBI.

While this invention has been described as having a preferred design and/or configuration, the present invention can be further modified within the spirit and scope of this disclosure. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A method of remote shopping in a video system, said method comprising:
receiving a television signal comprising auxiliary data associated with said television signal (122);
displaying in the video system a selectable purchase initiation icon for the purchase of the product or service associated with said television signal in response to at least a portion of the auxiliary data (124);
selecting the purchase initiation icon to initiate the purchase of the product or service (126);
establishing a data connection between the video system and an order center for the product or service (130);
sending user information being personal identifying data to the order center after establishment of the data connection;
**characterized in that** said personal identifying data being pre-stored in a memory of the video system, said sending of the personal identifying data from the video system to the order center is automatically triggered by the selection of the purchase initiation icon for the purchase of the product or service (132), and **in that** said method further comprises the step of establishing a voice connection between the user and an agent of the order center.

2. The method of claim 1, in which said method also comprises the step of automatically determining and indicating to the user when it is time to establish said voice connection after the sending of said personal identifying data.

3. The method of claims 1 or 2, in which said user information being personal identifying data are chosen among at least one of the following pieces of information:
a name of the user, a home address of the user, a mailing address of the user, a telephone number of the user, credit card information necessary for the purchase of the product or service by the user, and an identifier of a television of the user.

4. The method of any of the preceding claims, further comprising the step of:
muting audio of the video system upon establishment of the voice connection between the user and the agent of the order center.

5. The method according to any of the preceding claims, wherein the step of establishing a data connection between the video system and an order center upon selection of the purchase initiation icon is accomplished with one of a modem, a two-way pager and a cell phone.

6. The method according to any of the preceding claims, wherein the step of showing a selectable purchase initiation icon along with the advertisement on the display in response to at least a portion of the auxiliary data is accomplished with an on-screen display unit.

7. The method according to any of the preceding claims, wherein the step of permitting a user to select the purchase initiation icon to initiate purchase of a product or service in response to viewing the advertisement on the display is accomplished utilizing a remote controller of said video system.

8. The method according to any of the preceding claims, further comprising the step of:
showing status of the purchase of the product or service on the display during purchase initiation and sending of the user information.

9. A device for remote shopping in a video system, comprising:
means for receiving (44) a television signal comprising auxiliary data associated with said television signal;
means for displaying (34, 46) in the video system a selectable purchase initiation icon for the purchase of the product or service associated with said television signal in response to at least a portion of the auxiliary data;
means for selecting (48) the purchase initiation icon to initiate the purchase of the product or service;
means for establishing (56, 58) a data connection between the video system and an order center (64) for the product or service;
means for sending (56, 58) user information being personal identifying data to the order center (64) after establishment of the data connection;
**characterized in that** said device comprises also means for inputting and recording said personal identifying data in a memory (52) of the video system, **in that** said means for sending (56, 58) said pre-stored personal identifying data to the order center are provided for being automatically triggered by the selection of the purchase initiation icon for the purchase of the product or service, and **in that** said device further comprises means for establishing a voice connection between the user and an agent of the order center.

10. A device for remote shopping according to claim 9, **characterized in that** it comprises also means for indicating to the user when it is time to establish said voice connection after the sending of said personal identifying data.

11. A device for remote shopping according to claims 9 or 10, **characterized in that**:
- said device is a television operable to provide remote shopping;
- said receiving means comprise a selector (44) operable to receive said television signal, having an advertisement for a product or service and said associated auxiliary information;
- said selecting means comprise a processing unit and a control system (48) operable to allow a user to select the initiate purchase icon,
- said displaying means comprise a display (34) operable to show the television signal and the advertisement, and an on-screen display unit (46) operable to produce the initiate purchase icon on the display for the purchase of the product or service of the advertisement in response to the auxiliary information and in conjunction with the advertisement;
- said connection establishing means comprise communication means (56; 58) operable to establish the data connection, download information, and establish a voice connection;
- said memory (52) being in communication with said processing unit and containing said personal identifying data entered during a set-up mode and a plurality of instructions which, when executed by the processing unit causes:
1) the communication means to establish the data connection between the television and a remote order location upon the user selecting the initiate purchase icon to initiate a purchase transaction for the product or service of the advertisement;
2) the communication means to download the user information upon establishment of a data connection between the television and an order location; and
3) the communication means to establish a voice connection between the user and an agent of the order location upon completion of the downloading of the user information;
- and said inputting and recording means comprise storing set-up means intended to store said personal identifying data in the memory.

12. The device according to any of claims 9 to 11, wherein said device comprises means for causing audio of the television to mute upon establishment of the voice connection.

## Patentansprüche

1. Verfahren zum Ferneinkauf in einem Videosystem mit:
Empfang eines Fernsehsignals mit zusätzlichen Daten für das Fernsehsignal (122),
Wiedergabe eines wählbaren Icon für eine Einkaufbetätigung in dem Videosystem zum Kauf des Produktes oder des Service, das zu dem Videosignal gehört, aufgrund wenigstens eines Teils der zusätzlichen Daten (124),
Wahl des Kaufvorgangs-Icon zur Einleitung des Kaufs des Produkts oder des Service (126),
Herstellung einer Datenverbindung zwischen dem Videosystem und einem Bestellcenter für das Produkt oder den Service (130),
Sendung von Benutzerinformationen als persönliche Identifizierungsdaten zu dem Bestellcenter nach der Herstellung der Datenverbindung,
**dadurch gekennzeichnet, dass**
die persönlichen Identifizierungsdaten in einem Speicher des Videosystems vorgespeichert werden, dass die Sendung der persönlichen Identifizierungsdaten von dem Videosystem zu dem Bestellcenter automatisch durch die Wahl des Kaufvorgangs-Icon für den Kauf des Produktes oder des Service (132) ausgelöst wird, und dass das Verfahren außerdem den Schritt der Bildung einer Sprachverbindung zwischen dem Benutzer und einem Agenten des Bestellcenters enthält.

2. Verfahren nach Anspruch 1, in dem das Verfahren außerdem den Schritt der automatischen Ermittlung und Anzeige für den Benutzer enthält, wenn es Zeit ist, nach dem Senden der persönlichen Identifizierungsdaten die Sprachverbindung aufzubauen.

3. Verfahren nach Anspruch 1 oder 2, in dem die Benutzerinformationen, die persönliche Identifizierungsdaten sind, unter wenigstens einem der folgenden Informationsteile ausgewählt werden: Name des Benutzers, Privatadresse des Benutzers, eine Post-Adresse des Benutzers, eine Telefonnummer des Benutzers, Kreditkarten-Informationen, die für den Kauf des Produktes oder Service durch den Benutzer benötigt werden, und ein Identifizierer eines Fernsehgeräts des Benutzers.

4. Verfahren nach einem der vorangehenden Ansprüche mit folgendem Schritt:
Stummschaltung des Audio des Videosystems aufgrund der Herstellung der Sprachverbindung zwischen dem Benutzer und dem Agenten des Bestellcenters.

5. Verfahren nach einem der vorangehenden Ansprüche, wobei der Schritt der Herstellung einer Datenverbindung zwischen dem Videosystem und einem anderen Bestellcenter aufgrund des Kaufvorgangs-Icon mit einem Zweiwege-Pager und einem Mobiltelefon hergestellt wird.

6. Verfahren nach einem der vorangehenden Ansprüche, wobei der Schritt der Darstellung eines wählbaren Kaufvorgangs-Icon während der Herstellung auf der Wiedergabe aufgrund wenigstens eines Teils der zusätzlichen Daten mit einer Bildschirm-Wiedergabeeinheit erfolgt.

7. Verfahren nach einem der vorangehenden Ansprüche, wobei der Schritt, der es einem Benutzer ermöglicht, das Kaufvorgangs-Icon zu wählen, um den Kauf eines Produktes oder eines Service einzuleiten aufgrund der Betrachtung der Werbung auf der Wiedergabeeinheit durch Anwendung einer Fernbedienung des Videosystems erfolgt.

8. Verfahren nach einem der vorangehenden Ansprüche mit folgendem Schritt:
Darstellung des Status des Kaufs des Produktes oder des Service auf der Wiedergabeeinheit während der Kaufeinleitung und des Sendens der Benutzerinformationen.

9. Vorrichtung zum Ferneinkauf in einem Videosystem mit
Mitteln zum Empfang (44) eines Fernsehsignals mit Zusatzdaten für das Fernsehsignal,
Mitteln zur Wiedergabe (34, 46) in dem Videosystem eines wählbaren Kaufvorgangs-Icon für den Kauf des Produktes oder des Service für das Fernsehsignal aufgrund wenigstens eines Teils der Zusatzdaten,
Mitteln zur Wahl (48) des Kaufvorgangs-Icon zur Einleitung des Kaufs des Produktes oder des Service,
Mitteln zur Herstellung (56, 58) einer Datenverbindung zwischen dem Videosystem und einem Bestellcenter (64) für das Produkt oder den Service,
Mitteln zum Senden (56, 58) von Benutzerinformationen, die persönliche Identifikationsdaten sind, zu dem Bestellcenter (64) nach der Herstellung der Datenverbindung,
**dadurch gekennzeichnet, dass**
die Vorrichtung außerdem Mittel zur Eingabe und Aufzeichnung der persönlichen Identifizierungsdaten einem Speicher (52) des Videosystems enthält, dass die Mittel zum Senden (56, 58) der vorgespeicherten persönlichen Identifizierungsdaten zu dem Bestellcenter automatisch durch die Wahl des Kaufvorgangs-Icon für den Kauf des Produkt oder des Service erfolgt ausgelöst wird, und dass die Vorrichtung Mittel zur Herstellung einer Sprachverbindung zwischen dem Benutzer und einem Agenten des Bestellcenters enthalten.

10. Vorrichtung zum Fernkaufen nach Anspruch 9, **dadurch gekennzeichnet, dass** sie außerdem Mittel zu Anzeige für den Benutzer enthält, wann es Zeit ist, die Sprachverbindung nach dem Senden der persönlichen Identifizierungsdaten enthält.

11. Vorrichtung zum Fernkaufen nach Anspruch 9 oder 10, **dadurch gekennzeichnet, dass**:
- die Vorrichtung ein Fernsehgerät zur Durchführung des Fernkaufens ist,
- die Empfangsmittel einen Wähler (44) enthalten zum Empfang des Fernsehsignals mit einer Werbung für ein Produkt oder einen Service und die zugehörigen Zusatzinformationen,
- die Wahlmittel eine Verarbeitungseinheit und ein Steuersystem (48) enthalten, um es einem Benutzer zu ermöglichen, das Einkauf-Icon auszulösen,
- wobei die Wiedergabemittel eine Wiedergabeeinheit (34) zur Darstellung des Fernsehsignals und der Werbung und eine Wiedergabeeinheit (46) enthalten zur Erzeugung des Kauf-Icon auf der Wiedergabeeinheit für den Kauf des Produktes oder des Service aus der Werbung aufgrund der Zusatzinformationen und in Verbindung mit der Werbung
- die Mittel zur Herstellung der Verbindung Kommunikationsmittel (56, 58) zur Herstellung der Datenverbindung, Herunterladeinformationen enthalten und eine Sprachverbindung herstellen,
- der Speicher (52) in Kommunikation mit der Verarbeitungseinheit steht und die persönlichen Identifizierungsdaten enthält, die während eines Einrichtungsmodus eingegeben werden, und mehrere Instruktionen enthält, die durch die Verarbeitungseinheit folgendes bewirkt:
1) die Kommunikationsmittel zur Herstellung der Datenverbindung zwischen dem Fernsehgerät und einem entfernten Bestellpunkt aufgrund der Benutzerwahl für die Herstellung eines Kauf-Icon zur Auslösung eines Kaufvorgangs des Produktes oder des Service der Werbung,
2) die Kommunikationsmittel zum Herunterladen der Benutzerinformationen aufgrund der Herstellung einer Datenverbindung zwischen dem Fernsehgerät und dem Bestellpunkt und
3) die Kommunikationsmittel zur Herstellung einer Sprachverbindung zwischen dem Benutzer und einem Agenten des Bestellpunktes aufgrund der Vervollständigung der Herunterladung der Benutzerinformationen, und
-die Eingabe- und Aufzeichnungsmittel Speicher-Einrichtungsmittel enthalten, um die persönlichen Identifizierungsdaten in dem Speicher zu speichern.

12. Vorrichtung nach einem der Ansprüche 9 bis 11, wobei die Vorrichtung Mittel enthält, die bewirken, dass das Audio des Fernsehgerätes aufgrund der Herstellung der Sprachverbindung stummgeschaltet wird.

## Revendications

1. Procédé d'achat à distance dans un système vidéo, ledit procédé comprenant :
- la réception d'un signal de télévision comprenant des données auxiliaires associées audit signal de télévision (122) ;
- l'affichage, dans le système vidéo, d'une icône de lancement d'achat sélectionnable pour l'achat du produit ou du service associé audit signal de télévision en réponse à au moins une portion des données auxiliaires (124) ;
- la sélection de l'icône de lancement d'achat pour lancer l'achat du produit ou du service (126) ;
- l'établissement d'une communication de données entre le système vidéo et un centre de commande du produit ou du service (130) ;
- l'envoi d'informations utilisateur étant des données d'identification personnelles au centre de commande après l'établissement de la communication de données ;
**caractérisé en ce que** lesdites données d'identification personnelles étant pré-stockées dans une mémoire du système vidéo, ledit envoi des données d'identification personnelles du système vidéo au centre de commande est automatiquement déclenché par la sélection de l'icône de lancement d'achat pour l'achat du produit ou du service (132), et **en ce que** ledit procédé comprend en outre l'étape d'établissement d'une communication vocale entre l'utilisateur et un agent du centre de commande.

2. Le procédé de la revendication 1, dans lequel ledit procédé comprend également l'étape de détermination automatique et d'indication à l'utilisateur du moment où il faut établir ladite communication vocale après l'envoi desdites données d'identification personnelles.

3. Le procédé des revendications 1 ou 2, dans lequel lesdites informations utilisateur étant des données d'identification personnelles sont choisies parmi au moins l'une des informations suivantes : un nom d'utilisateur, une adresse de domicile de l'utilisateur, une adresse postale de l'utilisateur, un numéro de téléphone de l'utilisateur, des informations de carte de crédit nécessaires à l'achat du produit ou du service par l'utilisateur, et un identificateur d'une télévision de l'utilisateur.

4. Le procédé de n'importe laquelle des revendications précédentes, comprenant en outre l'étape de :
mise en sommeil de l'audio du système vidéo lors de l'établissement de la communication vocale entre l'utilisateur et l'agent du centre de commande.

5. Le procédé selon n'importe laquelle des revendications précédentes, dans lequel l'étape d'établissement d'une communication de données entre le système vidéo et un centre de commande lors de la sélection de l'icône de lancement d'achat s'effectue à l'aide de l'un des éléments suivants : un modem, un téléavertisseur bidirectionnel et un téléphone cellulaire.

6. Le procédé selon n'importe laquelle des revendications précédentes, dans lequel l'étape d'affichage d'une icône de lancement d'achat sélectionnable avec le message publicitaire sur l'écran en réponse à au moins une portion des données auxiliaires s'effectue à l'aide d'une unité d'affichage à l'écran.

7. Le procédé selon n'importe laquelle des revendications précédentes, dans lequel l'étape de permission à l'utilisateur de sélectionner l'icône de lancement d'achat pour lancer l'achat d'un produit ou d'un service en réponse à la visualisation du message publicitaire sur l'écran s'effectue à l'aide d'une télécommande dudit système vidéo.

8. Le procédé selon n'importe laquelle des revendications précédentes, comprenant en outre l'étape :
d'affichage de l'état de l'achat du produit ou du service sur l'écran pendant le lancement de l'achat et l'envoi des informations utilisateur.

9. Appareil d'achat à distance dans un système vidéo, comprenant :
- un moyen de réception (44) d'un signal de télévision comprenant des données auxiliaires associées audit signal de télévision ;
- des moyens d'affichage (34, 46), dans le système vidéo, d'une icône de lancement d'achat sélectionnable pour l'achat du produit ou du service associé audit signal de télévision en réponse à au moins une portion des données auxiliaires ;
- un moyen de sélection (48) de l'icône de lancement d'achat pour lancer l'achat du produit ou du service ;
- des moyens d'établissement (56, 58) d'une communication de données entre le système vidéo et un centre de commande (64) du produit ou du service ;
- des moyens d'envoi (56, 58) d'informations utilisateur étant des données d'identification personnelles au centre de commande (64) après l'établissement de la communication de données ;
**caractérisé en ce que** ledit appareil comprend également un moyen pour entrer et enregistrer lesdites données d'identification personnelles dans une mémoire (52) du système vidéo, **en ce que** lesdits moyens d'envoi (56, 58) desdites données d'identification personnelles pré-stockées au centre de commande sont fournis pour être automatiquement déclenchés par la sélection de l'icône de lancement d'achat pour l'achat du produit ou du service, et **en ce que** ledit appareil comprend en outre des moyens d'établissement d'une communication vocale entre l'utilisateur et un agent du centre de commande.

10. Appareil d'achat à distance selon la revendication 9, **caractérisé en ce qu'**il comprend également un moyen d'indication à l'utilisateur du moment où il faut établir ladite communication vocale après l'envoi desdites données d'identification personnelles.

11. Appareil d'achat à distance selon les revendications 9 ou 10, **caractérisé en ce que** :
- ledit appareil est une télévision utilisable pour fournir un achat à distance ;
- ledit moyen de réception comprend un sélecteur (44) utilisable pour recevoir ledit signal de télévision, comprenant un message publicitaire pour un produit ou un service et lesdites informations auxiliaires associées ;
- ledit moyen de sélection comprend une unité de traitement et un système de contrôle (48) utilisables pour permettre à l'utilisateur de sélectionner l'icône de lancement d'achat ;
- lesdits moyens d'affichage comprennent un écran (34) utilisable pour afficher le signal de télévision et le message publicitaire, et une unité d'affichage à l'écran (46) utilisable pour produire l'icône de lancement d'achat sur l'écran pour l'achat du produit ou du service du message publicitaire en réponse aux informations auxiliaires et associées au message publicitaire ;
- lesdits moyens d'établissement d'une communication comprennent des moyens de communication (56, 58) utilisables pour établir la communication de données, télécharger des informations et établir une communication vocale ;
- ladite mémoire (52) étant en communication avec ladite unité de traitement et contenant lesdites données d'identification personnelles entrées pendant un mode de paramétrage et une pluralité d'instructions qui, lorsqu'elles sont exécutées par l'unité de traitement, entraînent les événements suivants :
1) les moyens de communication établissent la communication de données entre la télévision et un centre de commande distant lorsque l'utilisateur sélectionne l'icône de lancement d'achat pour lancer une transaction d'achat pour le produit ou le service du message publicitaire ;
2) les moyens de communication téléchargent les informations utilisateur lors de l'établissement d'une communication de données entre la télévision et un centre de commande ; et
3) les moyens de communication établissent une communication vocale entre l'utilisateur et un agent du centre de commande lors de l'achèvement du téléchargement des informations utilisateur ;
- et ledit moyen d'entrée et d'enregistrement comprend un moyen de paramétrage de stockage destiné à stocker lesdites données d'identification personnelles dans la mémoire.

12. L'appareil selon n'importe laquelle des revendications 9 à 11, dans lequel ledit appareil comprend un moyen permettant de mettre en sommeil l'audio de la télévision lors de l'établissement de la communication vocale.
